# EUROPEAN PATENT SPECIFICATION

(11) **EP 3 354 873 B1**
(45) Date of publication and mention of the grant of the patent: **03.01.2024**
(21) Application number: 18161380.3
(22) Date of filing: 04.08.2015
(51) Int. Cl.: F02M 26/22

(54) **SYSTEM FOR REDUCING HARMFUL EMISSIONS OF AN INTERNAL COMBUSTION ENGINE**
SYSTEM ZUR VERRINGERUNG DES SCHADSTOFFAUSSTOSSES EINES VERBRENNUNGSMOTORS
SYSTÈME DE RÉDUCTION DES ÉMISSIONS NOCIVES D'UN MOTEUR À COMBUSTION INTERNE

(30) Priority: 07.08.2014 IT TO20140641
(43) Date of publication of application: 01.08.2018
(62) Divisional of application: 15179733.9
(73) Proprietor: S.T.C. S.r.l., 10091 Alpignano (TO) (IT)
(72) Inventor: COLONNA, Giuseppe, 10091 Alpignano (IT)
(74) Representative: Studio Torta S.p.A.

(56) References cited:
- EP-A1- 0 313 922
- WO-A1-02/33231
- DE-A1- 19 807 203
- DE-A1-102008 058 838
- DE-B3-102013 200 536

## Description

### Field of application of invention

The present invention relates to the field of systems for reducing the harmful emissions of internal combustion engines.

### State of the art

Internal combustion engines are equipped with at least two systems for reducing pollutant emissions, namely exhaust gas aftertreatment systems, known as ATS and exhaust gas recirculation systems, which recirculate exhaust gas through the internal combustion engine, known as EGR.

The pollutants are NOx, unburnt hydrocarbons HC and, for diesel engines, also particulate matter PM.

An ATS for diesel engines may comprise at least one the following:
- diesel particulate filter (DPF),
- diesel oxidation catalyst (DOC),
- diesel oxidation catalyst (DOC) combined with a diesel particulate filter (DPF),
- selective catalytic reduction (SCR)
- ammonia oxidation catalyst aka clean-up catalyst (CUC)
- selective catalytic reduction (SCR) combined with a clean-up catalyst (CUC).

Generally, the components of such an ATS are arranged in succession:

DOC - DPF - SCR - CUC

DOC for reducing unburnt hydrocarbons, DPF (and similar) for trapping particulate matter, SCR for reducing NOx and CUC for removing any excess ammonia resulting from operation of the SCR, which as is known cooperates with the injection of a urea-based solution for NOx reduction.

With regard to petrol engines, an ATS of a petrol engine is usually equipped with a so-called three-way catalyst for the simultaneous reduction of CO, HC and NOx. It can also be equipped with a pre-cat, that is to say a kind of DOC (like those implemented in diesel engines) placed immediately downstream of the exhaust manifold. In addition, the ATS of a petrol engine can also comprise an NSC (Nitrogen Storage Catalyst) and/or LNT (Lean NOx Trap) and/or a DPF (Diesel Particulate Filter).

EGR can be implemented both in petrol and in diesel engines and contributes to reducing NOx through oxygen depletion in the air mixture. This, as is known, causes a drop in efficiency of the internal combustion engine, increasing fuel consumption.

Thus, limiting harmful emissions comes at the expense of fuel consumption.

Another particularly decisive factor for achieving the above-mentioned objectives is the operation of the ATS within predetermined temperature ranges. One consequently speaks of ATS thermal management.

While an ATS of a diesel engine might not activate itself because the minimum activation temperature is not reached, which is generally 250°C, an ATS of a petrol engine runs the risk of exceeding the maximum design temperature, resulting in irreparable deterioration.

In diesel engines, the problem is usually overcome by choking the engine in order to increase the temperature of the exhaust gas inside the ATS by altering the operating point of the internal combustion engine.

In petrol engines, we have the opposite problem of having to limit the temperature of the ATS. This problem is overcome by increasing the petrol charge with respect to the stoichiometric ratio to reduce, with its evaporation, the overall temperature at the exhaust. It is obvious that this petrol cannot burn and so increases pollutants at the exhaust. In both cases, temperature control of the ATS is performed at the expense of fuel consumption.

DE 198 07 203 A1 discloses a method for treating the NOx in the exhaust gas from an internal-combustion engine which can be operated under lean-burn conditions, in more details using an NOx store and a catalytic converter which is independent thereof, and wherein the NOx being stored in the NOx store during lean-burn operation of the engine.

WO 02/33231 A1 discloses an exhaust treatment unit with a catalyst arrangement, comprising a storage catalyst, for the reduction of nitrogen oxides and an introduction device, for the introduction of a reducing agent on the input side of the storage catalyst, during a regeneration phase.

DE 10 2008 058838 A1 discloses an exhaust gas purification apparatus installed in a flow channel of an exhaust gas discharged from an engine.

EP 0 313 922 A1 discloses a method for reducing the exhaust gas temperature before said gases enter an exhaust gas catalyser. For this purpose, a component of the exhaust gas flow is removed from the exhaust gas system downstream of the exhaust gas catalyser, and is fed back into this exhaust gas flow upstream of the exhaust gas catalyser.

DE 10 2013 200536 B3 discloses a method and device for diagnosing a low pressure exhaust gas recirculation system (LPEGRS) of an internal combustion engine having an intake area for supplying fresh air which includes in succession in the flow direction a first section having a low pressure in which an air mass flow sensor is situated, a compressor and a second section having a high pressure, the engine exhaust area including a second section having a low exhaust gas pressure, and the LPEGRS which has an adjustable LPEGR valve recirculating at least a portion of the exhaust gas in the second section of the exhaust area to the first section of the intake area.

### Summary of invention

The object of the present invention is to achieve a reduction in the consumption of and/or the pollutants emitted by internal combustion engines.

These and other objects are achieved through the present invention.

The basic idea of the present invention is to perform exhaust gas recirculation through the ATS. In other words, instead of recirculating exhaust gas between the exhaust and the intake of the internal combustion engine, it is recirculated through at least one component of the ATS, without returning to the internal combustion engine.

This recirculation is performed via a recirculation line comprising pumping means, which can be controlled in different ways.

According to a preferred embodiment of the present invention, the recirculation is performed at the level of the component assigned to NOx reduction. Since a petrol engine usually employs a three-way catalyst TWC, this means that recirculation is performed at the three-way catalyst level.

In addition, a main object of the present invention is to enable better catalysis of the pollutants that pass through the ATS, while they pass through it and not to accumulate them and then eliminate them later on.

Therefore, the presence of an NSC or LNT or an HC adsorber in a recirculation circuit according to the present invention is entirely optional and subordinate to recirculation performed on at least one catalyst scrubber device, namely a DOC, DPF, SCR, CUC, TWC, pre-cat, etc.

The term 'pollutants' means not only those produced by the internal combustion engine, but in the specific case of the CUC, also the excess ammonia following injection of a urea-based agent in the ATS, generally immediately upstream of the SCR.

According to another preferred embodiment of the invention, recirculation is performed at the particulate filter DPF level.

According to further preferred embodiments of the invention the recirculation may regard not just one component of the ATS assigned to reducing pollutants, but also two or more of these components, possibly with separate and/or connected recirculation circuits.

For example, the recirculation could regard an SCR and an excess ammonia removal device CUC, or could regard both a DPF and an SCR, or could regard a DPF, an SCR and an associated CUC, or could regard a DOC or a TWC, a DPF, an SCR or an associated CUC, individually or in combination with each other.

The concept of recirculation described here cannot and must not be confused with the passage of exhaust gas through two similar or identical devices arranged in series one after the other.

The concept of recirculation described here assumes the passage of a portion of exhaust gas at least two times through one or more pollution abatement devices.

The concept of recirculation described here is also applicable to those applications where a first group of cylinders is connected to a first pollution abatement device and a second group of cylinders is connected to a second pollution abatement device and wherein a portion of exhaust gas taken downstream of said first pollution abatement device is sent to the inlet of said second pollution abatement device and vice versa.

Also in this case, it is obvious that the two devices, although similar or identical, are not reciprocally arranged in series with each other.

According to a preferred embodiment of the invention, said recirculation is performed continuously and modulated as a function of the power supplied by the internal combustion engine in order to reduce pollutants as they are generated and not, for example, to regenerate the one or more abatement devices through which the recirculation is performed. In this context, as indicated above, an 'abatement device' means a device that primarily catalyses polluting agents produced by the internal combustion engine and can only store them as a secondary effect, as in a DPF for example. Therefore, an LNT or an NSC should not be considered as a pollution abatement device according to the present invention.

The claims describe preferred embodiments of the present invention, forming an integral part of the present description.

### Brief description of figures

Further objects and advantages of the present invention will become clear from the detailed description that follows of an embodiment thereof (and of its embodiments) and from the accompanying drawings provided purely by way of non-limitative example, in which:
Figure 1 schematically shows an embodiment of the present invention adaptable to any type of internal combustion engine, Figures 2 - 4 and 6 - 7 show embodiments of the scheme in
Figure 1 applied to a diesel engine,
Figure 5 shows a further preferred embodiment applicable to both a diesel and a petrol engine, optionally combinable with the embodiments shown in Figures 2 - 4 and 6 - 7,
Figure 8 shows one of the various possible combinations of the solutions in Figure 6 and 7, and
Figure 9 shows a further embodiment applied to a petrol engine and optionally combinable with the solutions in Figure 5 and 6.

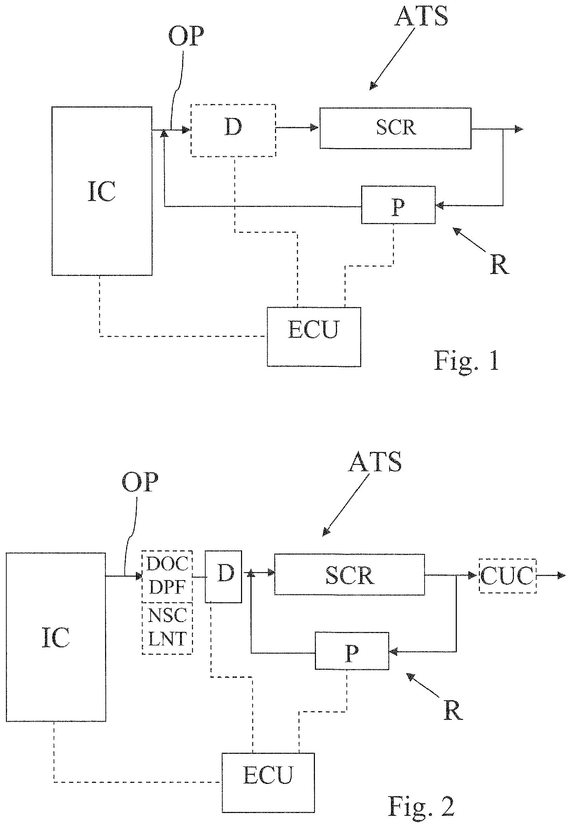

Figures 1-4 show examples not making part of the invention, but useful for its understanding.

Where a block is drawn with dashed lines, this means that it might not be present, especially for the purpose of making the schemes applicable to both the diesel cycle and the petrol (Otto) cycle; in addition, where more than one component is shown in a dashed box, they are to be considered in series with each other as taught by the known art.

The same reference numerals and letters in the figures identify the same elements or components.

### Detailed description of embodiments

Referring to Figure 1, an internal combustion engine IC has an exhaust manifold connected to an ATS comprising at least one pollutant abatement device.

In the case of a diesel engine, this can be represented by an SCR comprising a dosing and mixing device D of a urea-based reduction agent and/or a DPF particulate filter possibly equipped with a DOC. In the case of a petrol engine, this can be represented by a three-way catalyst TWC and/or a particulate filter.

In addition, especially for petrol engines, this pollutant abatement device can be an NSC (Nitrogen Storage Catalyst) or LNT (Lean NOx Trap) and/or a CUC.

A device is defined as 'upstream' or 'downstream' in relation to the normal circulation of exhaust gas from the exhaust manifold OP of the internal combustion engine IC to the environment.

It is worth distinguishing between abatement devices of a polluting substance such as a DOC or an SCR or a CUC and a storage device of a polluting substance such as an NSC or an LTN or an HC adsorber.

Particulate filters clearly belong to the first device category as the primary function they perform is to eliminate particulate matter without accumulating it, while the so-called forced regenerations due to the accumulation of particulate matter should be considered exceptional events. In fact, latest-generation particulate filters have high natural regeneration efficiency, achieved through the interaction between PM and N02, to limit or cancel the need for forced regenerations.

An additional line connects a point downstream of a first component of the ATS to a point upstream of the first component and/or upstream of at least a second component, in turn arranged upstream of the first component. This second point upstream of the component is, in any case, always downstream of the exhaust manifold of the internal combustion engine IC.

A fan or compressor or pump P facilitates recirculation. Hereafter, the term pump P may also indicate a fan, an ejector or a compressor.

The pump, as well as any valves and flaps that enable closing the additional recirculation line, are controlled by a processing unit ECU preferably coinciding with the engine control unit.

The recirculation line together with the pump P are generically defined as exhaust gas recirculation means R in the ATS, which has nothing to do with EGR performed on the internal combustion engine.

When the component on which recirculation is performed is an SCR, if the dosing and mixing device D is present, it is preferred that the recirculation be performed upstream of or to the doser in order to increase local turbulence in the gas, thereby aiding better mixing of the exhaust gas with the urea spray.

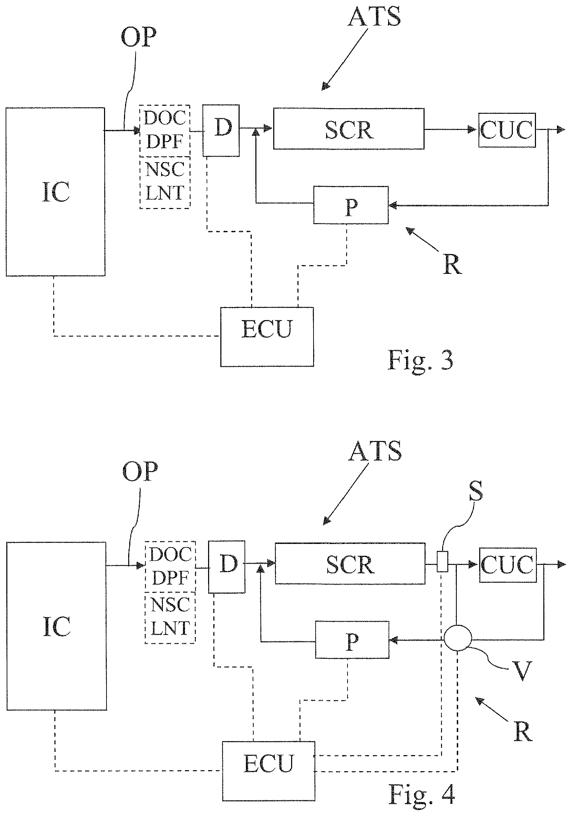

The CUC may or may not be present, and possibly integrated in the SCR. Extraction of exhaust gas can be performed either upstream, Figure 3, or downstream, Figure 4, of the CUC. Exothermic reactions take place in the CUC with the aim or removing excess ammonia. As a result of these reactions, the gas that passes through the CUC is heated even more. Therefore, it is particularly advantageous to recirculate exhaust gas extracted downstream of the CUC especially in warm-up conditions, where the ATS is below or just above its activation temperature. In these circumstances, the ECU can be programmed to provide enriched urea dosing, so as to maximize the exothermic reactions that take place in the CUC. In consequence, the gas extracted downstream of the CUC is definitely hotter and so its recirculation upstream of the SCR aids warm-up.

The technique of increasing the urea injected into the ATS when the SCR is cold, in order to improve its conversion efficiency at the expense of greater urea consumption, is known. According to the present invention, the exothermic effect resulting from this excess injection of urea is exploited thanks to the recirculation concept described herein.

According to the present invention, the exhaust gas recirculation of the ATS allows redirecting the heat produced at the CUC level to the ATS, to facilitate its warming up. Vice versa, when the ATS is in optimal operating conditions, from the thermal viewpoint, the practice of recirculating exhaust gas extracted upstream of the CUC can be advantageous, to exploit the excess ammonia it contains in the subsequent passage of this gas in the SCR. If it is not possible to selectively recirculate upstream and downstream of the CUC, then after the ATS is warmed up, the ECU limits the amount of urea to that strictly necessary for NOx conversion.

It is definitely advantageous to insert an ammonia and/or NOx sensor S between the SCR and the CUC, or possibly on the recirculation line, in order to control the injection of urea based on a measurement/estimate of excess ammonia. In this way it is possible to advantageously curb the consumption of urea that, together with fuel, contributes to determining the vehicle's running costs.

Therefore, according to a preferred embodiment of the invention (see Figure 4), two extraction points can be provided, one upstream and one downstream of the CUC, together with a three-way valve V, for example, of the ON/OFF type, switching between the two extraction points for gas to be recirculated in relation to the operating conditions of the ATS.

This solution is feasible even when the CUC is made in one piece with the SCR, as it can optionally comprise a matrix that is separate and independent of that of the SCR and so an opening can always be made in the casing of the SCR/CUC where there is a gap between the SCR matrix and that of the CUC.

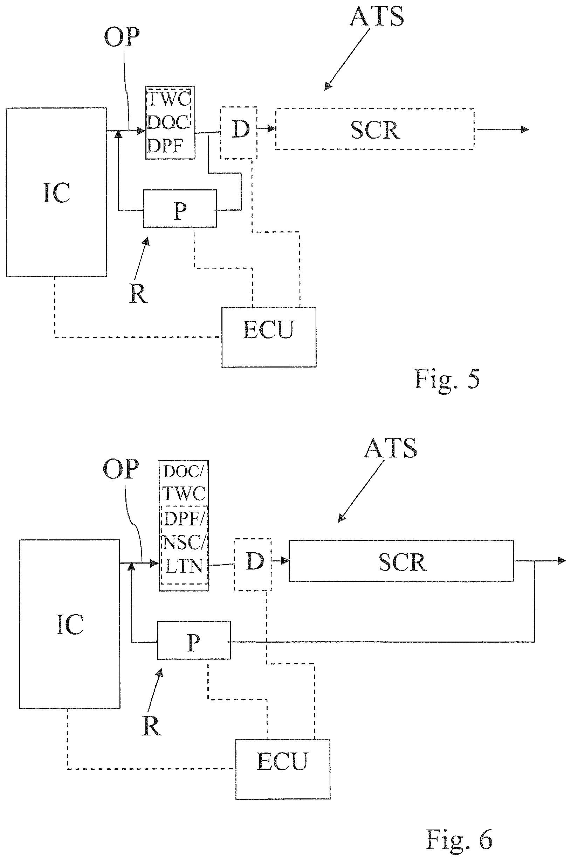

A similar effect for boosting ATS warm-up can be obtained by recirculating from a point downstream of the SCR to a point upstream of the DOC, namely putting the DOC, urea doser, SCR and possibly the DPF between the DOC and urea doser in the loop (see Figure 6). The excess urea in contact with the walls of the DOC will in fact generate the same exothermic reactions described regarding the CUC.

Based on what has been described so far, it is evident that a variable and controllable portion of exhaust gas is treated twice by the SCR. This advantageously results in a large NOx reduction without replicating the number of components of the ATS for handling the same result.

This means that it is possible to tolerate a higher percentage of NOx at the exhaust manifold, i.e. at the cylinder outlet, by limiting or stopping the action of the engine EGR, namely exhaust gas recirculation at the engine IC level, and/or by limiting or eliminating the fuel injection delay for the purpose of curbing NOx production.

In other words, in virtue of improved ATS efficiency, it is possible to avoid worsening the performance of the internal combustion engine for the purpose of reducing emitted pollutants.

The regulations currently in force require that NOx emissions into the atmosphere are less than 0.4 g/kWh.

It is estimated that 25% gas recirculation to the SCR can allow the emission regulations to be met, even when having 12-13g/kWh of NOx at the cylinder outlet. Such a high NOx level in output from the cylinders implies a fuel saving in the order of 2-3% with respect to today's standard, corresponding to 9-10 g/kWh, a consequence of the maximum efficiency of known SCR matrices.

This also corresponds to the effect of 10-15% engine EGR recirculation, which introduces pumping losses associated with the engine EGR recirculation that always entails greater fuel expenditure and the need to augment the heat dissipation capacity of the cooling system due to the EGR-cooler of the EGR.

Therefore, exhaust gas recirculation through the SCR can result in elimination of EGR, including the associated valve and cooler, in those applications that contemplate an EGR percentage of less than 15-200.

An analysis of the sizing of ATSes has been carried out. It has been found that under cruising speed conditions, the internal combustion engine rotates at a speed usually below 500 of the maximum number of revs. In consequence, under such conditions, the gas flow stabilizes at a flow rate below 450 of that rated by design for the ATS, which corresponds to the gas flow at the engine's maximum revs.

Therefore, at least in these conditions, the ATS can in theory support recirculation of 550 of its rated design flow without getting to the point of producing anomalous back pressure in the internal combustion engine.

Assuming an SCR efficiency of 96%, which is a reasonable value if the SCR's urea injection system is feedback controlled, and an exhaust gas flow passing through it composed for 75% by gas coming from the engine and containing approximately 13 g/KWh NOx and for 25% by gas recirculated through the ATS, approximately 0.39 g/KWh NOx is obtained in output from the ATS.

Even assuming NOx emissions at the cylinder outlets as high as 25 g/KWh, if in the presence of an SCR efficiency of 980, a value reached today under rated operating conditions, emissions into the atmosphere can be kept around the 0.4 g/KWh set by regulations.

For the calibrator (technician), this basically means being able to freely choose the fuel injection advance such as to have a preference for maximum fuel saving while ignoring NOx containment, yet always remain below the emissions levels set by regulations.

Furthermore, assuming an SCR efficiency of 90%, for example, in low operating temperature conditions or in deteriorated conditions due to component wear, it is possible to arrive at recirculating 500 of the rated exhaust gas flow and to control the injection advance by remaining around 8 g/KWh in input to the ATS, obtaining less than 0.4 g/KWh in output from the ATS, which represents the limit adopted by the most severe emission standards.

It is clear that, thanks to the present invention, it is possible to eliminate EGR also in those conditions where the EGR percentage is greater than 15-20% and/or increase the fuel injection advance times with respect to the PMS.

A larger quantity of NOx entering the ATS also entails a favourable impact on the accumulation of PM in the DPF. In fact, when the larger amount of NOx leaving the engine passes through the DOC it is partially transformed into NO2, which is oxide of nitrogen particularly reactive as an oxidant and which reacts at relatively low temperatures with the PM accumulated in the DPF. This mode of regeneration is said to be 'passive' or NO2-based and differs from the 'active' or O2-based one in that the injection of fuel to be burnt in the exhaust pipe is not necessary. In other words, the need for forced regenerations is completely eliminated and, all the more so, a DPF should not be considered an accumulator of pollutants, but a catalyst for pollutants, especially particulate matter.

Figure 5 shows an embodiment of the present invention, where the recirculation is performed through the DPF, which in the case of a diesel engine may comprise or integrate a DOC (not shown) arranged upstream of the DPF and, in the case of a petrol engine, may integrate or comprise a three-way catalyst TWC (not shown) arranged upstream of the DPF.

Since the latest regulations contemplate not only a reduction in the mass of particulate matter, but also the number of particles emitted, the solution shown in Figure 5 enables increasing the probability of particles with diameters smaller, e.g. PM2.5, than the filtration capability of the device colliding with particles of larger mass entering the DPF and with the walls of the DPF and thus be trapped. Therefore, the advantage achieved by the embodiment in Figure 5 is without doubt. In addition, it should be considered that the recirculation enables increasing turbulence in the exhaust gas, further increasing the probability of collision of particles of particulate matter with each other and with the walls of the DPF.

The effects described up to here regarding the embodiment in Figure 5 find even better application when the DPF is associated or integrated with a DOC or a TWC, possibly in one piece, and the recirculation is performed upstream of the DOC, so that many of the particles of mass smaller than the DPF's filter matrix have a higher probability of striking the walls of the DOC/TWC and becoming oxidized owing to the catalyser that covers the walls.

It is worth pointing out again that the of exhaust gas extracted downstream of the DPF and its recirculation upstream of the DOC/TWC virtually increases the NO2 available for the oxidation process of particulate matter, and so the efficiency of the TWC/DOC+DPF is further improved, defining a synergetic effect between the two.

This effect allows resorting less frequently to 02-based DPF regeneration.

Therefore, if on one hand it is made possible to produce a greater total level of NOx, due to the greater virtual efficiency of the ATS achieved by means of the present invention, on the other hand, the level of NO2 in the above-indicated flow is virtually increased due to the effect of recirculation upstream of the DOC/TWC.

Figure 6 shows a further embodiment of the present invention where the exhaust gas recirculation regards not only the DPF, but also the SCR/NSC/LTN downstream of the DPF.

This configuration in Figure 6, similar to that in Figure 4, is particularly advantageous in ATS warm-up conditions. In fact, the excess ammonia leaving the SCR/NSC/LTN and recirculated upstream of the DOC/TWC produces an exothermic reaction that induces heating of the DOC/TWC (not shown) and therefore of the ATS in general, exactly as described for the CUC.

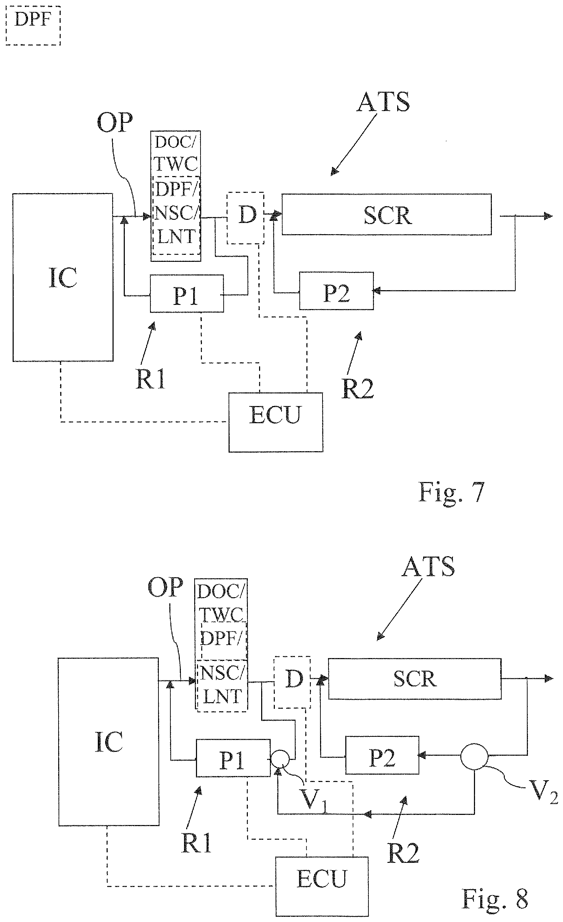

When the optimal temperature condition of the ATS is reached, the system can be switched to implement the solution in Figure 5 or, better still, the solution in Figure 7 described below. Figure 7 shows a embodiment employing two recirculation circuits R1 and R2 with two separate pumps P1 and P2, or a single, double-acting pump. They are substantially in series. Figure 7 represents a combination of Figures 2 and 5.

The first recirculation stage R1 causes a substantial reduction in particulate matter PM and NOx (NO2 fraction), which neutralize each other as described above. The second recirculation stage R2 removes almost all the remaining NOx, but with a considerable contribution to reducing urea consumption, especially if the extraction of exhaust gas is performed upstream of the CUC.

A synergetic effect of recirculation also exists on the SCR (or NSC/LTN). It is in fact known that the SCR has a secondary, but not marginal action of oxidizing particulate matter, especially very fine particles. It is clear how the recirculation of exhaust gas through the SCR also results in a greater reduction of this pollutant in addition to NOx.

The present technical solutions can be combined with known solutions for reducing pollutants that are based on a trade-off between injection advance, EGR exhaust gas recirculation through the internal combustion engine and efficiency of the ATS.

Therefore, not only is it possible to switch between the different schemes and combinations described herein, in relation to the operating conditions of the engine+ATS system, but also to regulate the nominal percentage of exhaust gas recirculated through the ATS, also in terms of single recirculation circuits, the degrees of fuel injection advance, the amount of urea to inject and, if an EGR system is present, also the EGR recirculation percentage.

For example, among the further combinations of schemes, an 'internal' recirculation could be provided to one or more components and an 'external' recirculation to more components, including that subjected to 'internal' recirculation. In other words, internal loops and external loops could be provided, different from or in combination with the solution in Figure 7.

Through the solutions in Figures 4 and 6 it is possible to eliminate or limit the use of flaps that choke the engine in order to facilitate warm-up of the ATS.

Therefore, another object achieved by the present invention is that of simplifying the thermal management of the ATS.

Figure 8 shows a solution that combines the solutions in Figure 6 and 7 through three-way valves V1 and V2, which enable switching between the solutions in Figures 6 and 7.

It is worth pointing out again that these valves can be of the ON/OFF type, but could also allow implementing a mixed operating mode, i.e. where both operating solutions function simultaneously.

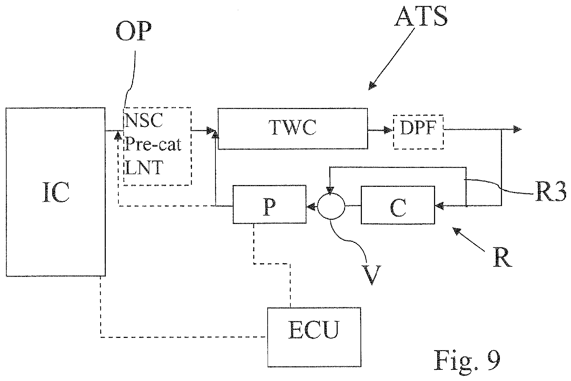

Figure 9 shows a embodiment , preferably adopted on a petrol engine, where a cooler is arranged on the exhaust gas recirculation line R, operating between a point downstream and a point upstream of the TWC, which allows the temperature of the recirculated gas to be lowered in order to achieve, as the weighted average of its temperature and the temperature of the gas leaving the engine, a reduction in the working temperature of that component in order to avoid it overheating.

It is worth pointing out that although only a TWC is indicated in Figure 9, it could be replaced by or integrated with other components, such as NSC/LTN/DPF.

It is known that if the temperature of 850 °C is exceeded, the catalysing beds start to degrade, resulting in progressive aging of the catalyst and deterioration of its conversion capacity with time. Today, this temperature is significantly exceeded by almost all petrol engines present on the market, especially turbocharged ones. Regulations have recently introduced a requirement, for petrol engines as well, of maintaining the type-approval emission limits for a mileage representative of the average life of the vehicle. Measures that prevent catalyst aging have thus been imposed.

It is clear that the invention also solves this technical problem.

A three-way valve and bypass means could be optionally provided for the cooler.

It is worth pointing out that recirculation can be also performed just through the ammonia abatement device aka clean-up device CUC in order to increase the related performance. Therefore, the present invention can be applied to any abatement component of at least one pollutant, belonging to/defining an ATS.

The present invention can be advantageously implemented via a computer program that comprises code means for implementing one or more steps of the method, when this program is executed on a computer. Therefore, it is understood that the scope of protection extends to said computer program and also to computer readable means that comprise a recorded program, said computer readable means comprising program code means for implementing one or more steps of the method, when said program is executed on a computer.

Implementational embodiments with respect to the non-limitative example described are possible without departing from the scope of the present invention, comprising all the equivalent embodiments, for an expert in the field.

The elements and the characteristics shown in the various preferred embodiments can be combined with each other without departing from the scope of the present invention.

## Claims

1. A system for reducing harmful emissions of a petrol internal combustion engine comprising an AfterTreatment System ATS having at least a first abatement device for one or more pollutant types contained in exhaust gas passing through the AfterTreatment System ATS and comprising first recirculation means (R, R1, R2) of a portion of said exhaust gas through said at least first abatement device; said first recirculation means including:
- an additional line connecting a first point downstream of said first abatement device to a second point upstream to the first abatement device and, in any case, downstream of an exhaust manifold of the petrol internal combustion engine (IC), and
- first pumping means (P) configured to facilitate recirculation of said portion of said exhaust gas;
the system being **characterized in that** said recirculation means including:
- a cooler (C) arranged on said first recirculation means to avoid an overheating of at least said first abatement device; wherein said first abatement device consists of a three-way catalyst TWC and/or wherein only a first abatement device is present and consists of a three-way catalyst TWC;
wherein said cooler comprises its own bypass means (V, R3), for being bypassed during an operating condition of exhaust gas recirculation through said three-way catalyst TWC.

2. The system according to claim 1, wherein said first recirculation means are designed to perform recirculation only to said first abatement device, or said ATS comprises at least a second abatement device , possibly different from said at least first abatement device, operatively arranged upstream or downstream of said at least first abatement device and wherein said first recirculation means (R, R1, R2) are designed to perform recirculation only to said first abatement device and/or to both said first and second abatement devices.

3. The system according to any of the preceding claims, wherein said recirculation is modulated as a function of the power supplied by said internal combustion engine.

4. The system according to one of the preceding claims, further comprising second recirculation means (R2) of a portion of said exhaust gas through said at least second abatement device arranged upstream or downstream of said first abatement device.

5. The system according to claim 4, further comprising a second cooler (C) arranged on said second recirculation means.

6. The system according to claim 4, wherein said second abatement device is arranged upstream of the first abatement device and consists of a NSC and/or a Pre-cat and/or an LNT.

7. The system according to one of the preceding claims, wherein said second recirculation means (R2) comprise a second pumping means (P2) possibly coincident with said first pumping means.

8. The system according to any one of previous claims 1 - 3, wherein said second abatement device is arranged upstream of the first abatement device and consists of a NSC and/or a Pre-cat and/or an LNT, the system further comprising a third abatement device consisting of a DPF arranged downstream of said first abatement device and wherein said first point is arranged downstream of said DPF.

9. The system according to claim 8, comprising only said first recirculation means, wherein said second point is between said first and second abatement devices.

10. A method of removing harmful emissions of an internal combustion engine comprising through a system according to any one of previous claims from 1 to 9, including the step of recirculating a portion of said exhaust gas through said at least first abatement device.

11. Method according to claim 10, wherein said first pumping means are controlled to virtually increase an efficiency of said first abatement device and wherein said cooler is arranged in order to avoid an overheating of at least said first abatement device.

12. A computer program that comprises program code means designed to control the implementation of all the steps of one of claims 10 or 11, when said program is executed on a computer.

13. Computer readable means comprising a recorded program, said computer readable means comprising program code means designed to control the implementation of all the steps of one of claims 10 or 11, when said program is executed on a computer.

## Patentansprüche

1. System zur Verringerung von Schadstoffausstößen einer Brennkraftmaschine, das ein Nachbehandlungssystem ATS umfasst, das mindestens eine erste Abgasreinigungsvorrichtung für einen oder mehrere Schadstofftypen aufweist, die in dem durch das Nachbehandlungssystem ATS strömenden Abgas enthalten sind, und das ein erstes Rückführungsmittel (R, R1, R2) für einen Teil des Abgases durch die mindestens erste Abgasreinigungsvorrichtung umfasst; wobei das erste Rückführungsmittel Folgendes umfasst:
- eine zusätzliche Leitung, die einen ersten Punkt stromabwärts der ersten Abgasreinigungsvorrichtung mit einem zweiten Punkt stromaufwärts der ersten Abgasreinigungsvorrichtung und in jedem Fall stromabwärts eines Auspuffkrümmers des Brennkraftmaschine (IC) verbindet, und
- erste Pumpmittel (P), die so konfiguriert sind, dass sie die Rückführung des Teils des Abgases erleichtern;
wobei das System **dadurch gekennzeichnet ist, dass**
die Rückführungsmittel umfassen:
- einen Kühler (C), der an dem ersten Rückführungsmittel angeordnet ist, um eine Überhitzung zumindest der ersten Abgasreinigungsvorrichtung zu vermeiden; wobei die erste Abgasreinigungsvorrichtung aus einem Dreiwegekatalysator TWC besteht und/oder wobei nur eine erste Abgasreinigungsvorrichtung vorhanden ist und aus einem Dreiwegekatalysator TWC besteht;
wobei der Kühler seine eigene Bypasseinrichtung (V, R3) umfasst, um während eines Betriebszustands der Abgasrückführung durch den Dreiwegekatalysator TWC umgangen zu werden.

2. System nach Anspruch 1, wobei die ersten Rückführungsmittel so ausgelegt sind, dass sie eine Rückführung nur zu der ersten Abgasreinigungsvorrichtung durchführen, oder das ATS mindestens eine zweite Abgasreinigungsvorrichtung umfasst, die sich möglicherweise von der mindestens ersten Abgasreinigungsvorrichtung unterscheidet und stromaufwärts oder stromabwärts der mindestens ersten Abgasreinigungsvorrichtung angeordnet ist, und wobei die ersten Rückführungsmittel (R, R1, R2) so ausgelegt sind, dass sie eine Rückführung nur zu der ersten Abgasreinigungsvorrichtung und/oder sowohl zu der ersten als auch der zweiten Abgasreinigungsvorrichtung durchführen.

3. System nach einem der vorhergehenden Ansprüche, wobei die Rückführung in Abhängigkeit von der von der Brennkraftmaschine gelieferten Leistung moduliert wird.

4. System nach einem der vorangehenden Ansprüche, das ferner ein zweites Rückführungsmittel (R2) für einen Teil des Abgases durch die mindestens zweite Abgasreinigungsvorrichtung umfasst, die stromaufwärts oder stromabwärts der ersten Abgasreinigungsvorrichtung angeordnet ist.

5. System nach Anspruch 4, das ferner einen zweiten Kühler (C) umfasst, der an der zweiten Umwälzeinrichtung angeordnet ist.

6. System nach Anspruch 4, wobei die zweite Abgasreinigungsvorrichtung stromaufwärts der ersten Abgasreinigungsvorrichtung angeordnet ist und aus einem NSC und/oder einem Vorkat und/oder einem LNT besteht.

7. System nach einem der vorhergehenden Ansprüche, wobei die zweite Rückführungseinrichtung (R2) eine zweite Pumpeinrichtung (P2) umfasst, die möglicherweise mit der ersten Pumpeinrichtung zusammenfällt.

8. System nach einem der vorhergehenden Ansprüche 1 bis 3, wobei die zweite Abgasreinigungsvorrichtung stromaufwärts der ersten Abgasreinigungsvorrichtung angeordnet ist und aus einem NSC und/oder einem Precat und/oder einem LNT besteht, wobei das System ferner eine dritte Abgasreinigungsvorrichtung umfasst, die aus einem stromabwärts der ersten Abgasreinigungsvorrichtung angeordneten DPF besteht, und wobei der erste Punkt stromabwärts des DPF angeordnet ist.

9. System nach Anspruch 8, das nur die erste Rückführungseinrichtung umfasst, wobei der zweite Punkt zwischen der ersten und der zweiten Abgasreinigungsvorrichtung liegt.

10. Verfahren zur Verringerung von Schadstoffausstößen einer Brennkraftmaschine durch ein System nach einem der vorhergehenden Ansprüche 1 bis 9, das den Schritt der Rückführung eines Teils des Abgases durch die mindestens erste Abgasreinigungsvorrichtung umfasst.

11. Verfahren nach Anspruch 10, wobei die ersten Pumpmittel so gesteuert werden, dass sie den Wirkungsgrad der ersten Abgasreinigungsvorrichtung praktisch erhöhen, und wobei der Kühler so angeordnet ist, dass er eine Überhitzung zumindest der ersten Abgasreinigungsvorrichtung verhindert.

12. Computerprogramm, das Programmcodemittel umfasst, die dazu bestimmt sind, die Durchführung aller Schritte nach einem der Ansprüche 10 oder 11 zu steuern, wenn das Programm auf einem Computer ausgeführt wird.

13. Computerlesbares Mittel, das ein aufgezeichnetes Programm umfasst, wobei das computerlesbare Mittel ein Programmcodemittel umfasst, das dazu bestimmt ist, die Ausführung aller Schritte nach einem der Ansprüche 10 oder 11 zu steuern, wenn das Programm auf einem Computer ausgeführt wird.

## Revendications

1. Système de réduction des émissions nocives d'un moteur à combustion interne à essence comprenant un système de post-traitement ATS ayant au moins un premier dispositif de réduction d'un ou plusieurs types de polluants contenus dans les gaz d'échappement traversant le système de post-traitement ATS et comprenant des premiers moyens de recirculation (R, R1, R2) d'une partie desdits gaz d'échappement à travers ledit au moins premier dispositif de réduction ; lesdits premiers moyens de recirculation comprenant
- une ligne supplémentaire reliant un premier point en aval dudit premier dispositif de réduction à un deuxième point en amont du premier dispositif de réduction et, dans tous les cas, en aval d'un collecteur d'échappement du moteur à combustion interne à essence (IC), et
- un premier moyen de pompage (P) configuré pour faciliter la recirculation de ladite partie desdits gaz d'échappement ;
le système étant **caractérisé en ce que** lesdits moyens de recirculation comprenant :
- un refroidisseur (C) disposé sur lesdits premiers moyens de recirculation pour éviter une surchauffe d'au moins ledit premier dispositif de réduction ; dans lequel ledit premier dispositif de réduction est constitué d'un catalyseur à trois voies TWC et/ou dans lequel seul un premier dispositif de réduction est présent et consiste en un catalyseur à trois voies TWC ;
dans lequel ledit refroidisseur comprend son propre moyen de dérivation (V, R3), destiné à être contourné pendant une condition de fonctionnement de recirculation des gaz d'échappement à travers ledit catalyseur à trois voies TWC.

2. Système selon la revendication 1, dans lequel lesdits premiers moyens de recirculation sont conçus pour effectuer une recirculation uniquement vers ledit premier dispositif de réduction, ou ledit ATS comprend au moins un deuxième dispositif de réduction, éventuellement différent dudit au moins premier dispositif de réduction, disposé de manière fonctionnelle en amont ou en aval dudit au moins premier dispositif de réduction et dans lequel lesdits premiers moyens de recirculation (R, R1, R2) sont conçus pour effectuer une recirculation uniquement vers ledit premier dispositif de réduction et/ou vers lesdits premier et deuxième dispositifs de réduction.

3. Système selon l'une des revendications précédentes, dans lequel ladite recirculation est modulée en fonction de la puissance fournie par ledit moteur à combustion interne.

4. Système selon l'une des revendications précédentes, comprenant en outre des deuxièmes moyens de recirculation (R2) d'une partie desdits gaz d'échappement à travers ledit au moins deuxième dispositif de réduction disposé en amont ou en aval dudit premier dispositif de réduction.

5. Système selon la revendication 4, comprenant en outre un deuxième refroidisseur (C) disposé sur lesdits deuxièmes moyens de recirculation.

6. Système selon la revendication 4, dans lequel ledit deuxième dispositif de réduction est disposé en amont du premier dispositif de réduction et est constitué d'un NSC et/ou d'un Pre-cat et/ou d'un LNT.

7. Système selon l'une des revendications précédentes, dans lequel lesdits deuxièmes moyens de recirculation (R2) comprennent un deuxième moyen de pompage (P2) éventuellement coïncidant avec ledit premier moyen de pompage.

8. Système selon l'une des revendications précédentes 1 à 3, dans lequel ledit deuxième dispositif de réduction est disposé en amont du premier dispositif de réduction et est constitué d'un NSC et/ou d'un Pre-cat et/ou d'un LNT, le système comprenant en outre un troisième dispositif de réduction constitué d'un DPF disposé en aval dudit premier dispositif de réduction et dans lequel ledit premier point est disposé en aval dudit DPF.

9. Système selon la revendication 8, comprenant uniquement lesdits premiers moyens de recirculation, dans lequel ledit deuxième point est entre lesdits premier et deuxième dispositifs de réduction.

10. Procédé d'élimination des émissions nocives d'un moteur à combustion interne comprenant l'utilisation d'un système selon l'une des revendications précédentes de 1 à 9, comprenant l'étape de recirculation d'une partie desdits gaz d'échappement à travers ledit au moins premier dispositif de réduction.

11. Procédé selon la revendication 10, dans lequel ledit premier moyen de pompage est commandé pour augmenter virtuellement une efficacité dudit premier dispositif de réduction et dans lequel ledit refroidisseur est agencé afin d'éviter une surchauffe d'au moins ledit premier dispositif de réduction.

12. Programme informatique qui comprend des moyens de code de programme conçus pour contrôler la mise en oeuvre de toutes les étapes de l'une des revendications 10 ou 11, lorsque ledit programme est exécuté sur un ordinateur.

13. Moyens lisibles par ordinateur comprenant un programme enregistré, lesdits moyens lisibles par ordinateur comprenant des moyens de code de programme conçus pour contrôler la mise en oeuvre de toutes les étapes de l'une des revendications 10 ou 11, lorsque ledit programme est exécuté sur un ordinateur.
